# FASCICULE DE BREVET EUROPEEN

(11) **EP 3 724 740 B1**
(45) Date de publication et mention de la délivrance du brevet: **06.12.2023**
(21) Numéro de dépôt: 18839820.0
(22) Date de dépôt: 12.12.2018
(51) Int. Cl.: G05D 23/02

(54) **VANNE THERMOSTATIQUE**
THERMOSTATVENTIL
THERMOSTATIC VALVE

(30) Priorité: 13.12.2017 FR 1762069
(43) Date de publication de la demande: 21.10.2020
(73) Titulaire: NOVARES France, 78140 Vélizy-Villacoublay (FR)
(72) Inventeur: QUEVALLIER, Jean-Claude, 59810 Lesquin (FR)
(74) Mandataire: Germain Maureau
(86) Numéro de dépôt international: PCT/FR2018/053240
(87) Numéro de publication internationale: WO 2019/115946

(56) Documents cités:
- EP-B1- 2 132 468
- WO-A1-2017/155483
- CN-B- 102 425 687
- US-A1- 2015 315 941

## Description

La présente invention concerne le domaine des vannes thermostatiques. Une vanne thermostatique est typiquement utilisée dans le domaine de la régulation thermique automatique pour des circuits de fluide (gaz, eau, huile, ...).

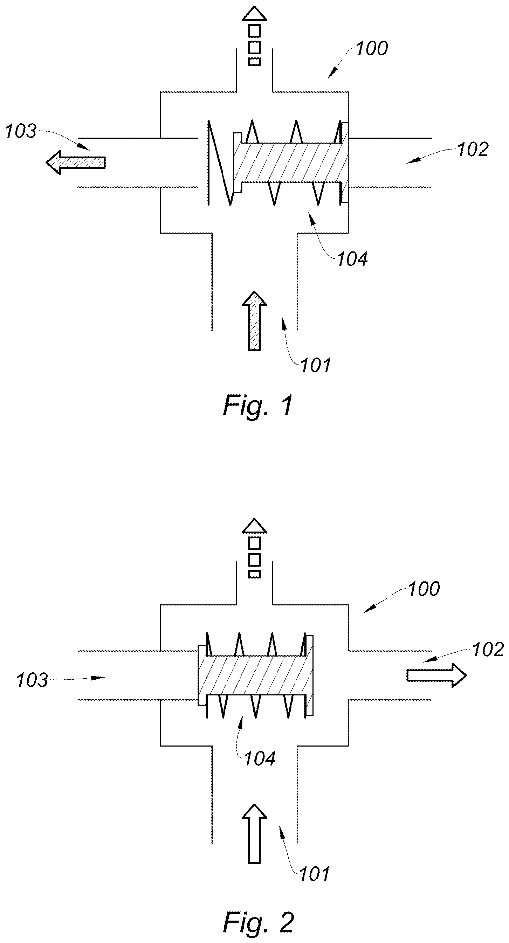

De manière connue, comme représenté sur les figures 1 et 2, une vanne thermostatique comprend un corps creux 100 fermé percé d'une ouverture d'admission 101, d'une sortie principale 102, d'une sortie de dérivation 103 et comprenant un obturateur 104 séparant alternativement l'ouverture d'admission 101 de la sortie principale 102 ou de la sortie de dérivation 103, de manière étanche. L'obturateur est sensible à la température du fluide de manière à s'ouvrir au-dessus d'une température seuil et à se refermer en dessous de ladite température seuil.

Une application illustrative dans le domaine automobile est la réalisation de boîtiers d'entrée d'eau (convergents) ou de boîtiers de sortie d'eau (divergents).

L'obturateur d'une vanne thermostatique comprend typiquement un actionneur thermostatique, telle une capsule à cire, et un volet actionné par l'actionneur thermostatique. La capsule à cire comprend un cylindre rempli d'une cire sensible à la température. La cire repousse une tige sous l'effet d'un important changement de volume accompagnant un changement de phase solide/liquide, se produisant à une température seuil ou température de début d'ouverture. L'obturateur peut par ailleurs être muni d'une jupe, comme décrit dans les documents EP 2 132 468, WO 2017/155483, CN 102 425 687 et US 2015/315941. En particulier, le document EP 2 132 468 porte sur une vanne thermostatique selon le préambule de la revendication 1.

Généralement, comme représenté sur les figures 1 et 2, la sortie principale 102 et la sortie de dérivation 103 sont alignées. L'obturateur 104 coulisse axialement pour obturer alternativement l'une ou l'autre des sorties. Selon cette disposition, l'obturateur est toujours en appui contre l'embouchure de l'une des sorties pour l'obturer. Une telle disposition est avantageuse en ce qu'il est aisé de réaliser l'étanchéité d'un tel obturateur. Cependant, une chaleur importante peut augmenter la dilatation de la capsule de cire au-delà de la course possible pour le volet. Dans ce cas, le volet risque de forcer contre les parois du corps creux, et de s'endommager. Pour éviter ce phénomène, une solution connue consiste à intégrer un dispositif élastique permettant d'absorber la surcourse de la capsule de cire. Cependant, ceci entraîne un surcout dû à la fabrication des différents éléments (volets, tige de guidage et ressort de surcourse) et un encombrement supplémentaire.

En outre, de manière classique, le volet est disposé perpendiculairement à l'axe de l'actionneur thermostatique. Une telle disposition est avantageuse en ce qu'il est aisé de réaliser l'étanchéité d'un tel volet pour un coût raisonnable. Un inconvénient est cependant, en cas de présence d'une différence entre les pressions appliquées d'un côté et de l'autre côté du volet, que l'actionneur thermostatique doit, lors de l'ouverture du clapet, développer un effort supplémentaire afin de vaincre cette différence de pression. Ce nécessaire effort supplémentaire introduit un retard à l'ouverture équivalent à une augmentation de la température seuil. Aussi la vanne thermostatique présente une sensibilité à la pression différentielle modifiant sa température seuil.

Pour palier ces problèmes, une solution connue du document WO 2017/155483 consiste à utiliser un corps creux dans lequel la sortie principale et la sortie de dérivation sont radiales. De plus, ce dispositif utilise la pression différentielle pour étanchéifier l'obturation d'une sortie par le clapet. Cependant, le clapet est composé de plusieurs pièces, ce qui rend sa fabrication complexe et onéreuse.

Il existe donc un besoin de fournir une vanne thermostatique insensible aux surcourses de la capsule de cire et à bas coût.

Selon une définition générale, l'invention concerne une vanne thermostatique comprenant un corps creux fermé, une première ouverture débouchant dans le corps creux, dite ouverture d'admission, une deuxième ouverture débouchant dans le corps creux, dite sortie principale, une troisième ouverture, sensiblement perpendiculaire à la deuxième ouverture, débouchant dans le corps creux, dite sortie de dérivation, et un obturateur permettant de séparer alternativement l'ouverture d'admission de la sortie principale ou de la sortie de dérivation. L'obturateur comprend un actionneur thermostatique et une jupe en matière plastique présentant au moins une fenêtre adaptée pour être traversée par un fluide. La jupe est adaptée pour coulisser dans le corps creux , selon un axe sensiblement confondu avec l'axe de l'actionneur thermostatique, entre une première position dans laquelle la jupe obture la sortie principale, de sorte que le fluide circule entre l'ouverture d'admission et la sortie de dérivation, une deuxième position dans laquelle la jupe libère la sortie principale et obture la sortie de dérivation, de sorte que le fluide issue de l'ouverture d'admission peut traverser la fenêtre et s'écouler dans la sortie principale, et une troisième position de surcourse dans laquelle une portion de la jupe est positionnée dans une zone de surcourse du corps creux et dans laquelle la jupe libère la sortie principale et obture la sortie de dérivation.

D'une manière particulièrement avantageuse, la jupe permet d'obturer des sorties perpendiculaires l'une par rapport à l'autre. Cette disposition permet de s'affranchir des problématiques de surcourses de la capsule de cire. En effet, en cas de surcourse de la capsule de cire, la jupe peut se déplacer dans le corps creux, dans la zone de surcourse tout en maintenant l'étanchéité de l'obturation de la sortie de dérivation et sans être comprimée contre l'embouchure d'une sortie de fluide.

L'obturation alternative de deux sorties radiales est permise par la fenêtre. En effet, lorsque la jupe est dans la première position, la jupe est écartée de la sortie de dérivation et obture la sortie principale. Lorsque la jupe est dans la deuxième position, la jupe obture la sortie de dérivation, mais la fenêtre permet au fluide de s'écouler entre l'ouverture d'admission et la sortie principale.

En outre, la souplesse relative de la jupe en matière plastique permet avantageusement d'utiliser les différences de pressions à l'intérieur du corps creux pour réaliser l'étanchéité de l'obturation en première ou en deuxième position.

La vanne thermostatique selon l'invention présente une structure simple, comprenant un nombre réduit d'éléments, réalisable à bas coût, par rapport aux vannes thermostatiques existantes qui utilisent des dispositifs élastiques onéreux.

Ainsi, l'invention propose une vanne thermostatique insensible aux surcourses de la capsule de cire et à bas coût.

La jupe comprend une paroi de fond sensiblement circulaire et une paroi latérale cylindrique dans laquelle est ménagée ladite au moins une fenêtre. La paroi de fond est adaptée pour obturer la sortie principale et la paroi latérale étant adaptée pour obturer la sortie de dérivation.

Le corps creux comprend au moins un épaulement positionné à l'embouchure de la sortie de dérivation, pour assurer une étanchéité statique avec la paroi latérale de la jupe lorsque la jupe est en deuxième position.

L'embouchure de la sortie principale présente une paroi conique.

La paroi de fond de la jupe présente un chanfrein adapté pour prendre appui contre la paroi conique.

La paroi latérale de la jupe présente deux fenêtres.

Selon un mode de réalisation, les deux fenêtres peuvent être diamétralement opposées.

Une portion de l'actionneur thermostatique traverse la paroi de fond de la jupe.

Selon une disposition particulière, le corps creux peut comprendre une quatrième ouverture, dite sortie de réchauffage, adaptée pour être obturée par la jupe dans la deuxième position.

La sortie de réchauffage et la sortie de dérivation peuvent être positionnées dans le corps creux à des cotes axiales distinctes.

Selon un mode de réalisation, le corps creux peut comprendre une cinquième ouverture, dite sortie d'aérotherme, la sortie d'aérotherme étant adaptée pour être obturée par la jupe dans la deuxième position.

La sortie d'aérotherme peut être positionnée selon un axe distinct de l'axe longitudinal de la sortie de dérivation, pour que la jupe obture ou libère séparément la sortie d'aérotherme et la sortie de dérivation.

La sortie d'aérotherme et la sortie de dérivation peuvent être positionnées dans le corps creux à des cotes axiales distinctes.

D'autres caractéristiques et avantages de la présente invention ressortiront clairement de la description détaillée ci après de deux modes de réalisation de l'invention donnés à titre d'exemples non limitatifs, en référence aux dessins annexés, dans lesquels :
- la figure 1 est une représentation schématique d'une vanne thermostatique de l'art antérieur dans lequel le clapet est en position d'obturation de la sortie principale,
- la figure 2 est une représentation schématique d'une vanne thermostatique de l'art antérieur dans lequel le clapet est en position d'obturation de la sortie de dérivation,
- la figure 3 est une vue schématique en coupe de face d'une vanne thermostatique selon un premier mode de réalisation de l'invention, lorsque la jupe est en première position ;
- la figure 4 est une vue schématique en coupe de face d'une vanne thermostatique selon un premier mode de réalisation de l'invention, lorsque la jupe est en deuxième position ;
- la figure 5 est une vue schématique en coupe de coté d'une jupe dans un corps creux selon l'invention ;
- la figure 6 est une vue schématique en coupe de face d'une vanne thermostatique selon un premier mode de réalisation de l'invention, lorsque la jupe est en position de surcourse ;
- la figure 7 est une vue schématique en coupe de face d'une vanne thermostatique selon un deuxième mode de réalisation de l'invention, lorsque la jupe est en première position,
- la figure 8 est une vue schématique en coupe de face d'une vanne thermostatique selon un deuxième mode de réalisation de l'invention, lorsque la jupe est en deuxième position,
- la figure 9 est une vue schématique en coupe de face d'une vanne thermostatique selon un troisième mode de réalisation de l'invention, lorsque la jupe est en première position,
- la figure 10 est une vue schématique en coupe de face d'une vanne thermostatique selon un troisième mode de réalisation de l'invention, lorsque la jupe est en position d'obturation de la sortie de réchauffage,
- la figure 11 est une vue schématique en coupe de face d'une vanne thermostatique selon un troisième mode de réalisation de l'invention, lorsque la jupe est en position d'obturation de la sortie de dérivation et de la sortie de réchauffage.

Par simplification, les éléments qui se retrouvent à l'identique dans les différentes formes de réalisation de l'invention portent des références identiques.

L'invention concerne une vanne thermostatique 1 qui comprend un corps creux 2 fermé.

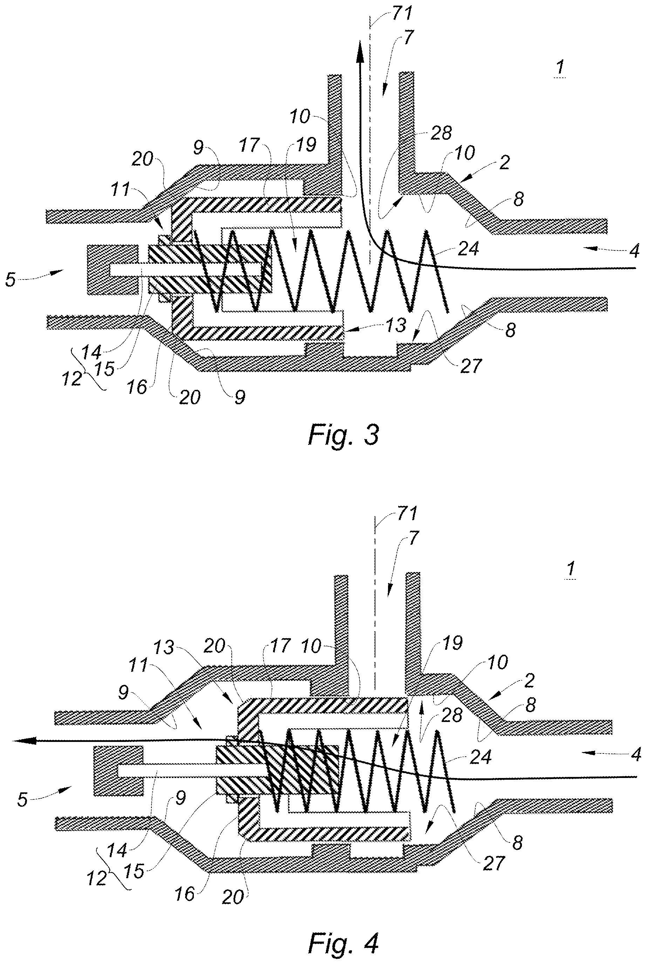

Tel qu'illustré aux figures 3 à 6, selon un premier mode de réalisation, le corps creux 2 présente trois ouvertures débouchantes : une première ouverture dite ouverture d'admission 4, une deuxième ouverture dite sortie principale 5 généralement connectée à un radiateur et une troisième ouverture dite sortie de dérivation 7 généralement connectée à un circuit de retour vers le moteur.

Comme on peut l'observer, l'ouverture d'admission 4 et la sortie principale 5 sont en vis-à-vis, sensiblement coaxiales. La sortie de dérivation 7 est positionnée entre l'ouverture d'admission 4 et la sortie principale 5, perpendiculairement à ces deux ouvertures. Tel que cela sera développé ultérieurement, le positionnement radial de la sortie de dérivation 7 est une disposition particulièrement avantageuse de l'invention.

L'embouchure de l'ouverture d'admission 4 peut présenter une paroi conique 8. De même, l'embouchure de la sortie principale 5 présente une paroi conique 9. Le corps creux 2 comprend deux nervures annulaires 10 positionnées à l'embouchure de la sortie de dérivation 7. La fonction des nervures annulaires 10 sera présentée ultérieurement.

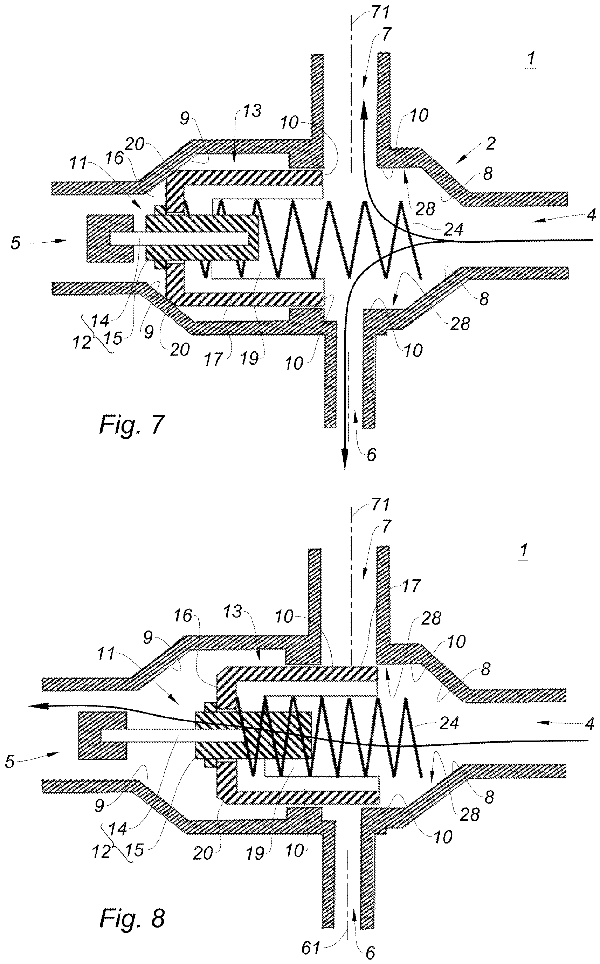

Selon un deuxième mode de réalisation, présenté aux figures 7 et 8, le corps creux 2 présente une quatrième ouverture dite sortie de réchauffage 6. La sortie de réchauffage 6 et la sortie de dérivation 7 sont positionnées dans le corps creux 2 à des cotes axiales distinctes. Le décalage entre la sortie de réchauffage 6 et la sortie de dérivation 7 peut être réalisé en décalant les axes longitudinaux 61 et 71 respectifs de la sortie de réchauffage 6 et de la sortie de dérivation 7. Le décalage peut aussi être obtenu en utilisant des sorties de diamètres différents.

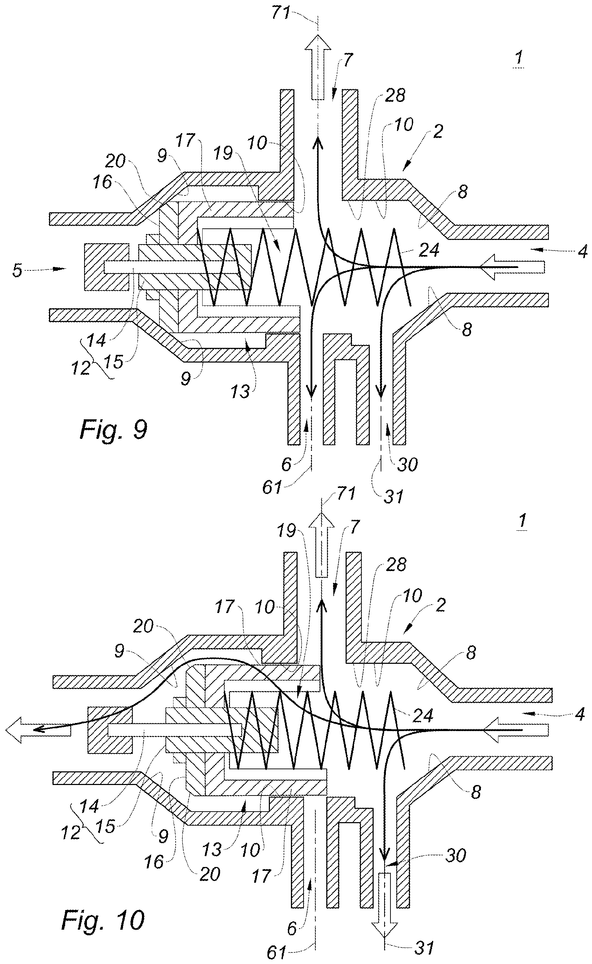

Selon un troisième mode de réalisation, présenté aux figures 9 à 11, le corps creux 2 présente une cinquième ouverture dite sortie d'aérotherme 30. La sortie d'aérotherme 30 et la sortie de dérivation 7 sont positionnées dans le corps creux 2 à des cotes axiales distinctes. Le décalage entre la sortie d'aérotherme 30 et la sortie de dérivation 7 peut être réalisé en décalant les axes longitudinaux 31 et 71 respectifs de la sortie d'aérotherme 30 et de la sortie de dérivation 7. Le décalage peut aussi être obtenu en utilisant des sorties de diamètres différents.

En outre, la vanne thermostatique 1 comprend un obturateur 11. L'obturateur 11 comprend un actionneur thermostatique 12 et une jupe 13 en matière plastique.

D'une manière classique, l'actionneur thermostatique 12 comprend une tige 14 fixée par une première extrémité au corps creux 2, à l'embouchure de la sortie principale 5. Une capsule de cire 15 est positionnée à la deuxième extrémité de la tige 14.

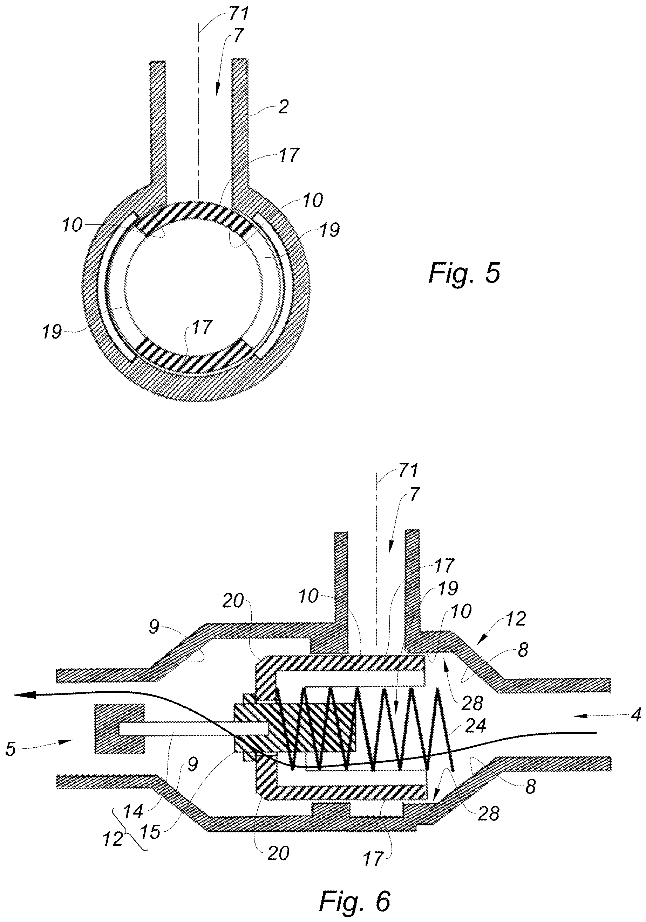

La jupe 13 comprend une paroi de fond 16 sensiblement circulaire et une paroi latérale 17 cylindrique. Selon les modes de réalisation ici présentés, en référence à la figure 5, la paroi latérale 17 présente deux fenêtres 19. Selon d'autres modes de réalisation, la paroi latérale 17 pourrait présenter un nombre différent de fenêtres 19.

Comme on peut l'observer sur la figure 5, les deux fenêtres 19 sont diamétralement opposées. Tel que cela sera développé ultérieurement, cette disposition technique permet à la jupe 13 d'obturer la sortie de dérivation 7 tout en permettant à un fluide de traverser les fenêtres 19 pour s'écouler dans la sortie principale 5.

La paroi de fond 16 présente un chanfrein 20 adapté pour prendre appui contre la paroi conique 9 de l'embouchure de la sortie principale 5.

La paroi de fond 16 est traversée par la capsule de cire 15. La capsule de cire 15 est fixée à la paroi de fond 16 de telle sorte qu'une dilatation de la capsule de cire 15 provoque une translation de la jupe 13.

Tel que cela va être décrit ci-après, la jupe 13 est mobile en translation dans le corps creux 2, entre plusieurs positions.

L'obturateur 11 comprend aussi un ressort de rappel 24, prenant appui contre la paroi de fond 16 et contre l'embouchure de l'ouverture d'admission 4.

En condition d'utilisation, dans un véhicule, la vanne thermostatique 1 peut être reliée au circuit de refroidissement du moteur du véhicule. La vanne thermostatique 1 permet alors d'orienter le liquide de refroidissement, généralement de l'eau glycolée, en fonction de sa température et donc de la température de fonctionnement du moteur.

A l'état initial, au démarrage du moteur, le liquide de refroidissement est froid, à température ambiante. Le fluide s'écoule par l'ouverture d'admission 4 et entre en contact avec la capsule de cire 15. La température du fluide provoque la dilatation ou la rétractation de la capsule de cire 15. Tant que la température du fluide n'atteint pas la température de dilatation de la cire, la capsule de cire 15 reste contractée. Lorsque la capsule de cire 15 est contractée, la jupe est maintenue dans une première position, dans laquelle, le ressort de rappel 24 pousse la jupe 15 contre l'embouchure de la sortie principale 5. Ainsi, dans la première position, la paroi de fond 16 de la jupe 13 obture la sortie principale 5. Dans cette première position la jupe 13 est écartée de la sortie de dérivation 7 (et/ou de la sortie de réchauffage 6 dans le cas du deuxième mode de réalisation, et/ou de la sortie d'aérotherme 30 dans le cas du troisième mode de réalisation). Lorsque la jupe 13 est en première position, le fluide s'écoule de l'ouverture d'admission 4 vers la sortie de dérivation 7 (et/ou de la sortie de réchauffage 6 dans le cas du deuxième mode de réalisation, et/ou de la sortie d'aérotherme 30 dans le cas du troisième mode de réalisation).

Lorsque la température du fluide atteint la température de dilatation de la cire, la capsule de cire 15 se dilate et pousse sur la jupe 13 en contrant l'action du ressort de rappel 24. La jupe 13 passe alors en deuxième position. En deuxième position, la paroi de fond 16 est écartée de la sortie principale 5. En revanche, la paroi latérale 17 obture la sortie de dérivation 7 (et la sortie de réchauffage 6 dans le cas du deuxième mode de réalisation). D'une manière particulièrement avantageuse, la pression différentielle entre les différents éléments du corps creux 2 déforme le matériau constitutif de la jupe 13 et ainsi, plaque la paroi latérale 17 contre les nervures annulaires 10. La pression de la paroi latérale 17 contre les nervures annulaires 10 augmente l'étanchéité statique de l'obturation de la sortie de dérivation 7 (et/ou de la sortie de réchauffage 6 dans le cas du deuxième mode de réalisation, et/ou de la sortie d'aérotherme 30 dans le cas du troisième mode de réalisation). Il est notable que, dans les cas du deuxième et du troisième mode de réalisation, le décalage de la sortie de réchauffage 6 et de la sortie d'aérotherme 30 par rapport à la sortie de dérivation 7 permet à la paroi latérale 17 d'obturer séparément ces différentes sorties.

Ainsi, dans le cas du deuxième mode de réalisation, en fonction de la dilatation de la capsule de cire 15, la paroi latérale 17 peut obturer uniquement la sortie de réchauffage 6, ou obturer la sortie de réchauffage 6 et la sortie de dérivation 7.

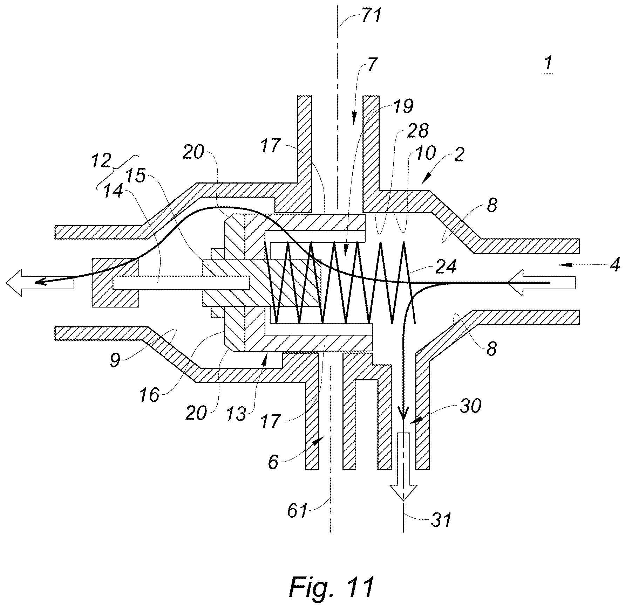

Dans le cas du troisième mode de réalisation, en fonction de la dilatation de la capsule de cire 15, la paroi latérale 17 peut obturer uniquement la sortie de réchauffage 6, comme représenté sur la figure 10, ou la sortie de réchauffage 6 et la sortie de dérivation 7 comme représenté sur la figure 11, ou la sortie de réchauffage 6, la sortie de dérivation 7 et la sortie d'aérotherme 30.

Avantageusement, les fenêtres 19 permettent au fluide de traverser la jupe 13 pour s'écouler dans la sortie principale 5.

Dans le cas d'une importante montée en température du fluide, la dilatation de la capsule de cire 15 peut provoquer une surcourse de la jupe 13, qui passe alors en position de surcourse. Comme représenté sur la figure 6, en position de surcourse, la jupe 13 peut translater dans le corps creux 2, dans une zone de surcourse 28. La zone de surcourse 28 est constituée des nervures annulaires 10. Ainsi, en position de surcourse, la jupe 13 peut translater sans entrer en collision avec le corps creux 2 tout en maintenant l'étanchéité de l'obturation de la sortie de dérivation 7 (et de la sortie de réchauffage 6 dans le cas du deuxième mode de réalisation),

Lorsque la température du fluide redescend sous la température de dilatation de la cire, le ressort de rappel 24 repositionne la jupe 13 dans la première position.

Ainsi, la vanne thermostatique 1 selon l'invention présente une structure simple, comprenant un nombre réduit d'éléments, réalisable à bas coût, par rapport aux vannes thermostatiques existantes qui utilisent des dispositifs élastiques onéreux.

L'invention propose donc une vanne thermostatique insensible aux surcourses de la capsule de cire, permettant la fermeture séquencée de plusieurs sorties, et à bas coût.

Bien entendu, l'invention ne se limite pas aux seules formes d'exécutions représentées ci-dessus, mais elle embrasse au contraire toutes les formes de réalisation.

## Revendications

1. Vanne thermostatique (1) comprenant un corps creux (2) fermé, une première ouverture débouchant dans le corps creux (2), dite ouverture d'admission (4), une deuxième ouverture débouchant dans le corps creux (2), dite sortie principale (5), une troisième ouverture, sensiblement perpendiculaire à la deuxième ouverture, débouchant dans le corps creux (2), dite sortie de dérivation (7), et un obturateur (11) permettant de séparer alternativement l'ouverture d'admission (4) de la sortie principale (5) ou de la sortie de dérivation (7), dans laquelle l'obturateur (11) comprend un actionneur thermostatique (12) et une jupe (13) présentant au moins une fenêtre (19) adaptée pour être traversée par un fluide, la jupe (13) étant adaptée pour coulisser dans le corps creux (2), selon un axe sensiblement confondu avec l'axe de l'actionneur thermostatique (12), entre une première position dans laquelle la jupe (13) obture la sortie principale (5), de sorte que le fluide circule entre l'ouverture d'admission (4) et la sortie de dérivation (7), et une deuxième position dans laquelle la jupe (13) libère la sortie principale (5) et obture la sortie de dérivation (7), de sorte que le fluide issue de l'ouverture d'admission (4) peut traverser la fenêtre (19) et s'écouler dans la sortie principale (5), dans laquelle la jupe (13) peut coulisser dans une troisième position de surcourse dans laquelle une portion de la jupe (13) est positionnée dans une zone de surcourse (28) du corps creux (2) et dans laquelle la jupe (13) libère la sortie principale (5) et obture la sortie de dérivation (7), **caractérisée en ce que** la jupe (13) est formée d'un matériau souple en matière plastique et **en ce que** le corps creux (2) comprend deux nervures annulaires (10) positionnées à l'embouchure de la sortie de dérivation (7), pour assurer une étanchéité statique avec la paroi latérale (17) de la jupe (13) lorsque la jupe (13) est en deuxième position, l'étanchéité étant augmentée du fait de la déformation du matériau constitutif de la jupe (13) sous l'effet de la pression différentielle entre les différents éléments du corps creux (2).

2. Vanne thermostatique (1) selon la revendication 1, **caractérisée en ce que** la jupe (13) comprend une paroi de fond (16) sensiblement circulaire et une paroi latérale (17) cylindrique dans laquelle est ménagée ladite au moins une fenêtre (19), la paroi de fond (16) étant adaptée pour obturer la sortie principale (5) et la paroi latérale (17) étant adaptée pour obturer la sortie de dérivation (7).

3. Vanne thermostatique (1) selon la revendication 1 ou 2, **caractérisée en ce que** l'embouchure de la sortie principale (5) présente une paroi conique (9).

4. Vanne thermostatique (1) selon la revendication 3, **caractérisée en ce que** la paroi de fond de la jupe (13) présente un chanfrein (20) adapté pour prendre appui contre la paroi conique (9).

5. Vanne thermostatique (1) selon l'une quelconque des revendications 2 à 4, **caractérisée en ce que** la paroi latérale de la jupe (13) présente deux fenêtres (19) diamétralement opposées.

6. Vanne thermostatique (1) selon l'une quelconque des revendications 2 à 5, **caractérisée en ce qu'**une portion de l'actionneur thermostatique (12) traverse la paroi de fond (16) de la jupe (13).

7. Vanne thermostatique (1) selon l'une quelconque des revendications 1 à 6, **caractérisée en ce que** le corps creux (2) comprend une quatrième ouverture, dite sortie de réchauffage (6), la sortie de réchauffage (6) étant adaptée pour être obturée par la jupe (13) dans la deuxième position.

8. Vanne thermostatique (1) selon la revendication 7, **caractérisée en ce que** la sortie de réchauffage (6) et la sortie de dérivation (7) sont positionnées dans le corps creux (2) à des cotes axiales distinctes.

9. Vanne thermostatique (1) selon l'une des revendications 1 à 8, **caractérisée en ce que** le corps creux (2) comprend une cinquième ouverture, dite sortie d'aérotherme (30), la sortie d'aérotherme (30) étant adaptée pour être obturée par la jupe (13) dans la deuxième position.

10. Vanne thermostatique (1) selon la revendication 9, **caractérisée en ce que** la sortie d'aérotherme (30) et la sortie de dérivation (7) sont positionnées dans le corps creux (2) à des cotes axiales distinctes.

11. Vanne thermostatique (1) selon les revendications 7 et 9, **caractérisée en ce que** la sortie d'aérotherme (30) est positionnée selon un axe distinct de l'axe longitudinal de la sortie de réchauffage (6), pour que la jupe (13) obture ou libère séparément la sortie d'aérotherme (30) et la sortie de réchauffage (6).

## Patentansprüche

1. Thermostatisches Ventil (1), umfassend einen geschlossenen Hohlkörper (2), eine erste Öffnung, die in den Hohlkörper (2) mündet, die sogenannte Einlassöffnung (4), eine zweite Öffnung, die in den Hohlkörper (2) mündet, den sogenannten Hauptauslass (5), eine dritte Öffnung, die im Wesentlichen senkrecht zur zweiten Öffnung liegt und in den Hohlkörper (2) mündet, den sogenannten Bypass-Auslass (7), und einen Verschluss (11), der ermöglicht, dass die Einlassöffnung (4) abwechselnd vom Hauptauslass (5) oder vom Bypass-Auslass (7) getrennt wird, wobei der Verschluss (11) ein thermostatisches Betätigungselement (12) und eine Schürze (13) umfasst, die mindestens ein Sichtfenster (19), das dazu ausgelegt ist, von einem Fluid durchströmt zu werden, wobei die Schürze (13) dazu ausgelegt ist, im Hohlkörper (2) entlang einer Achse, die im Wesentlichen mit der Achse des thermostatischen Betätigungselements (12) zusammenfällt, zwischen einer ersten Position, in der die Schürze (13) den Hauptauslass (5) verschließt, so dass das Fluid zwischen der Einlassöffnung (4) und dem Bypass-Auslass (7) zirkuliert, und einer zweiten Position zu gleiten, in der die Schürze (13) den Hauptauslass (5) freigibt und den Bypass-Auslass (7) verschließt, so dass das Fluid aus der Einlassöffnung (4) durch das Sichtfenster (19) strömen und aus dem Hauptauslass (5) fließen kann, wobei die Schürze (13) in eine dritte Überhubposition hineingleiten kann, in der ein Teil der Schürze (13) in einer Überhubzone (28) des Hohlkörpers (2) positioniert ist und in der die Schürze (13) den Hauptausgang (5) freigibt und den Bypass-Auslass (7) verschließt, **dadurch gekennzeichnet, dass** die Schürze (13) aus einem flexiblen Kunststoffmaterial hergestellt ist und dass der Hohlkörper (2) zwei ringförmige Rippen (10) umfasst, die an der Mündung des Bypass-Auslasses (7) positioniert sind, um eine statische Abdichtung mit der Seitenwand (17) der Schürze (13) zu gewährleisten, wenn sich die Schürze (13) in der zweiten Position befindet, wobei die Abdichtung aufgrund der Deformierung des Materials, aus dem die Schürze (13) besteht, unter der Wirkung des Differenzdrucks zwischen den verschiedenen Elementen des Hohlkörpers (2) erhöht wird.

2. Thermostatisches Ventil (1) nach Anspruch 1, **dadurch gekennzeichnet, dass** die Schürze (13) eine im Wesentlichen kreisförmige Rückwand (16) und eine zylindrische Seitenwand (17) umfasst, in der das mindestens eine Sichtfenster (19) vorgesehen ist, wobei die Rückwand (16) dazu ausgelegt ist, den Hauptauslass (5) zu verschließen, und die Seitenwand (17) dazu ausgelegt ist, den Bypass-Auslass (7) zu verschließen.

3. Thermostatisches Ventil (1) nach Anspruch 1 oder 2, **dadurch gekennzeichnet, dass** die Mündung des Hauptauslasses (5) eine konische Wand (9) aufweist.

4. Thermostatisches Ventil (1) nach Anspruch 3, **dadurch gekennzeichnet, dass** die Rückwand der Schürze (13) eine Abschrägung (20) aufweist, die dazu ausgelegt ist, an der konischen Wand (9) anzuliegen.

5. Thermostatisches Ventil (1) nach einem der Ansprüche 2 bis 4, **dadurch gekennzeichnet, dass** die Seitenwand der Schürze (13) zwei diametral gegenüberliegende Sichtfenster (19) aufweist.

6. Thermostatisches Ventil (1) nach einem der Ansprüche 2 bis 5, **dadurch gekennzeichnet, dass** ein Teil des thermostatischen Betätigungselements (12) durch die Rückwand (16) der Schürze (13) verläuft.

7. Thermostatisches Ventil (1) nach einem der Ansprüche 1 bis 6, **dadurch gekennzeichnet, dass** der Hohlkörper (2) eine vierte Öffnung, den sogenannten Heizauslass (6), umfasst, wobei der Heizauslass (6) dazu ausgelegt ist, durch die Schürze (13) in der zweiten Position verschlossen zu werden.

8. Thermostatisches Ventil (1) nach Anspruch 7, **dadurch gekennzeichnet, dass** der Heizauslass (6) und der Bypass-Auslass (7) in unterschiedlichen axialen Abmessungen im Hohlkörper (2) positioniert sind.

9. Thermostatisches Ventil (1) nach einem der Ansprüche 1 bis 8, **dadurch gekennzeichnet, dass** der Hohlkörper (2) eine fünfte Öffnung, den sogenannten Heizlüfterauslass (30), umfasst, wobei der Heizlüfterauslass (30) dazu ausgelegt ist, durch die Schürze (13) in der zweiten Position verschlossen zu werden.

10. Thermostatisches Ventil (1) nach Anspruch 9, **dadurch gekennzeichnet, dass** der Heizlüfterauslass (30) und der Bypass-Auslass (7) in unterschiedlichen axialen Abmessungen im Hohlkörper (2) positioniert sind.

11. Thermostatisches Ventil (1) nach den Ansprüchen 7 und 9, **dadurch gekennzeichnet, dass** der Heizlüfterauslass (30) entlang einer von der Längsachse des Heizauslasses (6) getrennten Achse positioniert ist, so dass die Schürze (13) den Heizlüfterauslass (30) und den Heizauslass (6) getrennt verschließt oder freigibt.

## Claims

1. A thermostatic valve (1) comprising a closed hollow body (2), a first opening leading into the hollow body (2), called inlet opening (4), a second opening leading into the hollow body (2), called main outlet (5), a third opening, substantially perpendicular to the second opening, leading into the hollow body (2), called the bypass outlet (7), and a shutter (11) allowing the inlet opening to be separated alternately (4) of the main outlet (5) or of the bypass outlet (7), in which the shutter (11) comprises a thermostatic actuator (12) and a skirt (13) having at least one window (19) adapted to be traversed by a fluid, the skirt (13) being adapted to slide in the hollow body (2), along an axis substantially coinciding with the axis of the thermostatic actuator (12), between a first position in which the skirt (13) closes the main outlet (5), so that the fluid circulates between the inlet opening (4) and the bypass outlet (7), and a second position in which the skirt (13) releases the main outlet (5) and closes the bypass outlet (7), so that the fluid coming from the inlet opening (4) can pass through the window (19) and flow into the main outlet (5), in which the skirt (13) can slide into a third overtravel position in which a portion of the skirt (13) is positioned in an overtravel zone (28) of the hollow body (2) and in which the skirt (13) releases the main outlet (5) and closes the bypass outlet (7), **characterized in that** the skirt (13) is made of a flexible plastic material and **in that** the hollow body (2) comprises two annular ribs (10) positioned at the mouthpiece of the bypass outlet (7), to ensure a static seal with the lateral wall (17) of the skirt (13) when the skirt (13) is in the second position, the seal being increased due to the deformation of the material constituting the skirt (13) under the effect of the differential pressure between the various elements of the hollow body (2).

2. The thermostatic valve (1) according to claim 1, **characterized in that** the skirt (13) comprises a bottom wall (16) substantially circular and a lateral wall (17) cylindrical in which is provided said at least one window (19), the bottom wall (16) being adapted to close the main outlet (5) and the lateral wall (17) being adapted to close the bypass outlet (7).

3. The thermostatic valve (1) according to claim 1 or 2, **characterized in that** the mouthpiece of the main outlet (5) has a conical wall (9).

4. The thermostatic valve (1) according to claim 3, **characterized in that** the bottom wall of the skirt (13) has a chamfer (20) adapted to bear against the conical wall (9).

5. The thermostatic valve (1) according to any one of claims 2 to 4, **characterized in that** the lateral wall of the skirt (13) has two diametrically opposed windows (19).

6. The thermostatic valve (1) according to any one of claims 2 to 5, **characterized in that** a portion of the thermostatic actuator (12) passes through the bottom wall (16) of the skirt (13).

7. The thermostatic valve (1) according to any one of claims 1 to 6, **characterized in that** the hollow body (2) comprises a fourth opening, called the heating outlet (6), the heating outlet (6) being adapted to be closed by the skirt (13) in the second position.

8. The thermostatic valve (1) according to claim 7, **characterized in that** the heating outlet (6) and the bypass outlet (7) are positioned in the hollow body (2) at different axial dimensions.

9. The thermostatic valve (1) according to any of claims 1 to 8, **characterized in that** the hollow body (2) comprises a fifth opening, called the heater outlet (30), the heater outlet (30) being adapted to be closed by the skirt (13) in the second position.

10. The thermostatic valve (1) according to claim 9, **characterized in that** the heater outlet (30) and the bypass outlet (7) are positioned in the hollow body (2) at different axial dimensions.

11. The thermostatic valve (1) according to claims 7 and 9, **characterized in that** the heater outlet (30) is positioned along an axis distinct from the longitudinal axis of the heating outlet (6), so that the skirt (13) separately closes or releases the heater outlet (30) and the heating outlet (6).
